# EUROPÄISCHE PATENTSCHRIFT

(11) **EP 3 046 882 B1**
(45) Veröffentlichungstag und Bekanntmachung des Hinweises auf die Patenterteilung: **04.04.2018**
(21) Anmeldenummer: 14761888.8
(22) Anmeldetag: 11.09.2014
(51) Int. Cl.: C03B 37/014

(54) **VERFAHREN ZUR HERSTELLUNG VON EISEN-DOTIERTEM KIESELGLAS**
METHOD FOR PRODUCING IRON-DOPED SILICA GLASS
PROCÉDÉ DE FABRICATION DE VERRE DE QUARTZ DOPÉ AU FER

(30) Priorität: 16.09.2013 DE 102013110177
(43) Veröffentlichungstag der Anmeldung: 27.07.2016
(73) Patentinhaber: Heraeus Quarzglas GmbH & Co. KG, 63450 Hanau (DE)
(72) Erfinder: OCHS, Stefan, 63571 Gelnhausen (DE)
(74) Vertreter: Staudt, Armin Walter
(86) Internationale Anmeldenummer: PCT/EP2014/069408
(87) Internationale Veröffentlichungsnummer: WO 2015/036493

(56) Entgegenhaltungen:
- JP-A- H07 215 735
- US-A- 3 486 913
- US-A- 4 419 118
- US-A- 5 043 002

## Beschreibung

### Technischer Hintergrund

Die vorliegende Erfindung betrifft ein Verfahren zur Herstellung eines Rohlings aus Eisen-dotiertem, hochkieselsäurehaltigem Glas.

### Stand der Technik

Es sind Gläser bekannt, die im infraroten Spektralbereich (Wellenlängenbereich etwa 800 nm bis 2 µm) absorbieren und im sichtbaren Spektralbereich (Wellenlängenbereich 400 nm bis 800 nm) lichtdurchlässig sind. Diese sogenannten Wärmeschutz-Gläser oder auch Shortpass-Filtergläser sind üblicherweise Eisendotierte Gläser. Abhängig von den Herstellbedingungen (Rohstoffe, Glasmatrix, Schmelztemperatur und Atmosphäre) ist Eisen in Gläsern als metallisches Eisen (kolloidal), als Fe²⁺ oder als Fe³⁺ eingebaut. Fe³⁺ zeigt Absorptionsbanden im Ultraviolettbereich bei etwa 380 nm und 410 nm, deren Ausläufer im Sichtbaren zu einer bräunlichen Gelbfärbung führen. Das Fe²⁺⁻Ion hingegen weist sich überlappende Absorptionsbanden im Infrarotbereich (bei etwa 1000 nm und bei 2000 nm) auf, deren Ausläufer in das Sichtbare für eine Blaufärbung des Glases sorgen. Liegen beide Oxidationsstufen vor, erscheint das Glas grünlich. Die in üblichen Kalk-Natron-Silikat-Gläsern vorhandenen Alkaliionen verschieben das Gleichgewicht zwischen Fe²⁺ und Fe³⁺ zugunsten von Fe³⁺, was die Verwendung dieser Gläser als Wärmeschutzgläser aufgrund der relativ schlechten Transmission im sichtbaren Spektralbereich begrenzt.

Bei einem bekannten Verfahren zur Herstellung von Eisen-dotiertem Glas wird ein poröses Silikatglas mit einer Eisensalzlösung imprägniert. Ausgangsmaterial hierfür sind Borosilikatgläser, die zur Erzeugung des porösen SiO₂ Gerüsts ausgelaugt werden, wobei allerdings Reste von Bor im Glas zurückbleiben, die die Hitzebeständigkeit stark reduzieren. Außerdem liegt das Eisen je nach Prozessführung bei der Herstellung dieser Gläser in Form von Fe³⁺- und Fe²⁺-Ionen vor, wobei der relativ hohe Anteil an Fe³⁺ die Lichtdurchlässigkeit im sichtbaren Spektralbereich reduziert und daher der Einsatz als Wärmeschutzglas unbefriedigend ist.

Aufgrund dieser Problematik wurden Wärmeschutz-Gläser vorgeschlagen, die auf Quarzglas als Ausgangssubstanz basieren und mit Eisen dotiert sind (im Folgenden auch "Eisen-dotiertes Kieselglas" genannt).

Aus US 4 500 642 A und US 4 419 118 A sind derartige Gläser bekannt, wobei eine Dotierung des Quarzglases mit Eisen und Aluminium erfolgt. Die entsprechenden Oxide werden in Pulverform beim Erschmelzen einer natürlichen Quarzkörnung in einer Knallgasflamme oder einem Lichtbogen zugegeben. Die so erhaltenen, blockförmigen Rohlinge werden nach dem Erschmelzen einer Nachbehandlung in einer Wasserstoff enthaltenden Atmosphäre unterzogen, so dass der Oxidationszustand des Eisens zugunsten von Fe²⁺ Ionen verändert wird. Durch die Nachbehandlung verändert sich die Farbe des Fe-dotierten Kieselglases von anfänglich mehr oder weniger braun nach hell durchscheinend-türkisblau. Diese Veränderung wird auch bei der Transmissionsmessung im sichtbaren bzw. infraroten Spektralbereich bestätigt. Das erschmolzene Fe-dotierte Kieselglas ohne Nachbehandlung in Wasserstoff enthaltender Atmosphäre zeigt im sichtbaren Spektralbereich nur eine Transmission von maximal 20 %, die im Infrarotbereich auf etwa 40% ansteigt, wohingegen die Probe nach den Behandlung mit Wasserstoff im sichtbaren Spektralbereich eine Transmission von mehr als 80 % aufweist, - bei etwa gleichermaßen absorbierenden Verhalten (bis 40%) im Infrarotbereich. Gemäß diesem Stand der Technik wird weiterhin die Codotierung mit Aluminium als erforderlich angesehen, da bei Fehlen von Aluminium das Fe-dotierte Kieselglas nicht ausreichend hitzebeständig sei und bei dauerhafter Anwendung eine Dunkelfärbung des Glases eintrete. Letzteres beruhe auf einer stabilisierenden Wirkung zugunsten der Oxidationsform Fe²⁺ durch das multivalente Aluminium.

### Technische Aufgabenstellung

Das Verfahren nach dem Stand der Technik erfordert eine zeitaufwendige Nachbehandlung an dem bereits verglasten Rohling. Verfahrensbestimmend ist die Diffusion des Wasserstoffs, der den Rohling durchdringen muss. Insbesondere bei großvolumigen Rohlingen wird durch die Nachbehandlung keine ausreichend homogene Reduktion zu Fe²⁺ erreicht. Ein weiterer Nachteil des Verfahrens nach den Stand der Technik ist die Zugabe eines zweiten Dotierstoffes, da eine homogene Verteilung des zweiten Dotierstoffes und die reproduzierbare Einstellung des Oxidationszustandes des Eisens aufgrund des zweiten Dotierstoffes problematisch ist.

Der Erfindung liegt die Aufgabe zugrunde ein alternatives Verfahren zur Herstellung eines Rohlings aus Fe-dotiertem Kieselglas anzugeben, bei dem das Verhältnis von Fe²⁺ / Fe³⁺ zugunsten von Fe²⁺ beeinflusst wird, und das die oben genannten Nachteile des bekannten Verfahrens vermeidet.

### Allgemeine Beschreibung der Erfindung

Diese Aufgabe wird durch ein Verfahren zur Herstellung eines Rohlings aus Eisen-dotiertem, hochkieselsäurehaltigem Glas mit einem Eisen-Gehalt im Bereich zwischen 0,1 und 1 Gew.-%, mit einer internen Transmission von maximal 40 % im infraroten Wellenlängenbereich von 800 nm bis 2000 nm und mit einer internen Transmission von mindestens 85 % im sichtbaren Spektralbereich mit Wellenlängen von 400 nm bis 800 nm bei einer Probendicke von 1 mm, für den Einsatz als Wärmeschutzglas mit den folgenden Verfahrensschritten gelöst:
(a) Herstellen eines Eisen-dotierten SiO₂-Sootkörpers mittels Flammenhydrolyse einer Silizium enthaltenden und einer Eisen enthaltenden Ausgangssubstanz,
(b) Trocknen des Sootkörpers derart, dass sich ein mittlerer Hydroxylgruppengehalt von weniger als 10 Gew.-ppm einstellt,
(c) Verglasen des Sootkörpers, der Eisen in einem ersten Oxidationszustand Fe³⁺ enthält, unter einer reduzierend wirkenden Atmosphäre, die geeignet ist, das Fe³⁺ enthält, unter einer reduzierend wirkenden Atmosphäre, die geeignet ist, das Eisen zumindest teilweise von dem ersten Oxidationszustand Fe³⁺ in einen zweiten, niedrigeren Oxidationszustand Fe²⁺ zu reduzieren, unter Bildung des Rohlings aus Eisen-dotiertem, hochkieselsäurehaltigem Glas.

Bei diesem Verfahren wird synthetisches Kieselglas erhalten, das mit Eisen dotiert ist.

Synthetisches, Fe-dotiertes Kieselglas kann prinzipiell auch nach dem einstufigen "Direktverfahren" hergestellt werden, bei dem die abgeschiedenen Fe²⁺ und Fe³⁺ enthaltende SiO₂-Partikel direkt verglast werden. Dabei stellt sich aber typischerweise ein höherer OH-Gehalt im Bereich von etwa 450 bis 1200 Gew.-ppm ein. Durch den relativ hohen OH-Gehalt ist aber der Anteil an Fe²⁺ Ionen eher gering, so dass erst durch eine intensive Nachbehandlung, beispielsweise in einer Wasserstoff enthaltenden Atmosphäre wie im Stand der Technik, der Anteil an Fe²⁺ erhöht werden kann, um die entsprechende Transparenz im sichtbaren Wellenlängenbereich zu erzielen. Ein nach dem Direktverfahren hergestelltes, synthetisches Fe-dotierte Kieselglas ist nicht Gegenstand der Erfindung.

Bei der Herstellung von synthetischem, Fe-dotiertem Kieselglas nach dem so genannten "Sootverfahren" durch Flammenhydrolyse werden in der Flamme durch Hydrolyse oder Oxidation erzeugte, Fe²⁺ und Fe³⁺ enthaltende SiO₂-Partikel unter Bildung eines Eisen-dotierten Sootkörpers auf einer Ablagerungsfläche abgeschieden. Erst in einem weiteren Verfahrensschritt wird dieser Sootkörper zu dotiertem, dichtem Fe-dotierte Kieselglas verglast. Es folgt vor dem Verglasen eine Trocknung oder Dehydratationsbehandlung zur Entfernung des angelagerten Wassers, so dass eine Blasenbildung beim Verglasen ausgeschlossen werden kann. Herstellungsbedingt zeigt so hergestelltes Fe-dotiertes Kieselglas Hydroxylgruppengehalte im Bereich einiger weniger Gew.-ppm bis 300 Gew.-ppm. In dem Verfahren gemäß der Erfindung wird durch die besonders intensive Trocknungsbehandlung ein OH-Gehalt von kleiner 10 Gew.-ppm eingestellt. Infolge dieses geringen Anteils an OH-Gruppen kann eine "interne Oxidation" des Eisens nur in geringem Umfang stattfinden, was sich zugunsten des Anteils von Fe²⁺ auswirkt. Insofern ist das Sootverfahren besonders geeignet für die Herstellung des Fe-dotierten Kieselglases, da der Anteil von Fe³⁺ von vornherein niedrig gehalten werden kann. Die reduzierende Atmosphäre während des Verglasens gewährleistet, dass noch ein weiterer Anteil der Fe³⁺-Ionen in Fe²⁺ überführt wird. Somit ist die Zugabe eines weiteren Dotierstoffes in Form eines multivalenten Metalls, wie dies im Stand der Technik für Aluminium beschrieben ist, nicht notwendig.

Der mit dem erfindungsgemäßen Verfahren erhöhte Anteil von Fe²⁺ im Vergleich zu Fe³⁺ bewirkt, dass das Fe-dotierte Kieselglas keine störende Absorption im Wellenlängenbereich von etwa 400 nm bis 800 nm aufgrund von Fe³⁺ Ionen zeigt und das Fe-dotierte Kieselglas demnach hohe Transparenz in diesem Wellenlängenbereich aufweist. Die interne Transmission an einer 1 Millimeter dicken Probe beträgt im Idealfall mehr als 90 %, oder sogar mehr als 95 %. Unter interner Transmission wird die Transmission über die Probendicke, korrigiert um den Anteil der Oberflächenverluste, bezeichnet. Im Infrarotbereich bei Wellenlängen von etwa 800nm bis 2 µm zeigt sich aber eine starke Absorption durch Fe²⁺ Ionen, d.h. die interne Transmission geht hier je nach Eisen-Gehalt auf Werte zwischen 30 und 40% zurück. Dieses Glas ist für den Einsatz als Wärmeschutzglas besonders prädestiniert.

Nachfolgend werden geeignete Verfahrensmodifikationen näher erläutert.

Es hat sich vorteilhaft gezeigt, wenn die reduzierend wirkende Atmosphäre Wasserstoff enthält. Wasserstoff hat den besonderen Vorteil, dass er großtechnisch in hoher Reinheit erhältlich ist und im Zusammenhang mit der Herstellung von synthetischem Quarzglas meist ohnehin als Brennergas verfügbar ist. Die Reduktion des Eisens vom Oxidationszustand Fe³⁺ in den Oxidationszustand Fe²⁺ durch die Wasserstoff enthaltende Atmosphäre kann durch die folgende Reaktionsformel beschrieben werden: 2 Fe³⁺ + 2 O²⁻ + H₂ → 2 Fe²⁺ +2 OH⁻

Eine reduzierend wirkende Atmosphäre, die einen Anteil an Wasserstoff in Helium im Bereich 1 mbar bis 100 mbar umfasst, hat sich in diesem Zusammenhang besonders bewährt. Zur Vermeidung einer zündfähigen Wasserstoff enthaltenden Atmosphäre wird Helium als Träger- bzw. Inertgas eingesetzt. Bei einem Wasserstoffpartialdruck größer 100 mbar besteht zumindest bei längerer Anwendungsdauer das Risiko, dass auch SiO₂ zu SiO reduziert wird und sich unerwünschte SiH-Gruppen im Kieselglas bilden.

Weiterhin ergibt sich ein optimierter Verfahrensablauf, wenn die reduzierend wirkende Atmosphäre einen Druck unterhalb von Atmosphärendruck (1 bar) aufweist. Üblicherweise findet die Verglasung in einem evakuierbaren Ofen statt, wobei zunächst der Ofenraum evakuiert wird, um auf diese Weise etwaige Rest an oxidierender Atmosphäre zu entfernen. Anschließend wird eine solche Menge an reduzierend wirkender Atmosphäre eingelassen, dass sich bei der Verglasung ein Druck unterhalb von einem bar im Ofenraum einstellt.

Vorteilhafterweise wird der Sootkörper beim Verglasen nach Verfahrensschritt (c) in einem Ofen isotherm auf eine Verglasungstemperatur erhitzt und dabei während einer Behandlungsdauer von 3 bis 15 Stunden der reduzierend wirkenden Atmosphäre ausgesetzt. Eine Behandlungsdauer von weniger als 3 Stunden würde zu wenig Fe³⁺ in Fe²⁺ reduzieren, so dass der so hergestellte Rohling keine ausreichende Transparenz im sichtbaren Spektralbereich zeigen und, je nach Temperatur, keine vollständige Verglasung des Sootkörpers erreicht würde. Abgesehen von der verminderten Wirtschaftlichkeit einer über 15 Stunden hinausgehenden Behandlungsdauer in reduzierend wirkender Atmosphäre ist dies im Hinblick auf die Reduktion von Fe³⁺ zu Fe²⁺ nicht schädlich. Es kann aber in Folge dessen zur unerwünschten Reduktion von SiO₂ zu unterstöchiometrischem SiOₓ kommen.

Vorteilhafterweise wird nach dem Verglasen des Sootkörpers gemäß Verfahrensschritt (c) in dem Rohling mindestens 97 % des Eisens im Oxidationszustand Fe²⁺ erhalten. Damit ist eine hohe Transparenz im sichtbaren Spektralbereich und hohe Absorption im Infrarotbereich gewährleistet.

Eine weitere vorteilhafte Maßnahme des erfindungsgemäßen Verfahrens besteht darin, dass nach dem Verglasen des Sootkörpers gemäß Verfahrensschritt (c) eine Temperung des Rohlings in einem Temperaturbereich von 300°C bis 1000°C und unter einer Wasserstoff im Bereich von 15 mbar bis 30 bar enthaltenden Atmosphäre durchgeführt wird. Je nach Volumen des Rohlings und nach Temperatureinstellung ist die Wirkung der Temperung unter Wasserstoff enthaltender Atmosphäre mehr oder weniger intensiv. Die Temperung des Rohlings hat einerseits Auswirkung auf die Einstellung der fiktiven Temperatur als ein Maß für den Ordnungszustand der Glasstruktur und andererseits bewirkt der Wasserstoff, wie erwähnt, die Reduzierung von Fe³⁺ zu Fe²⁺. Da die Behandlung in einer Wasserstoff enthaltenden Atmosphäre nun am verglasten Rohling stattfindet, ist die Reaktionszeit - bestimmt durch die Diffusion des Wasserstoffs - verhältnismäßig lang. Dennoch wirkt dies als unterstützende Maßnahme vorteilhaft im Sinne einer Maximierung des Anteils von Fe²⁺ Ionen im Rohling.

Alternativ zur Temperung des Rohlings unter einer Wasserstoff enthaltenden Atmosphäre nach dem Verglasen kann auch vor dem Verglasen gemäß Verfahrensschritt (c) eine Konditionierungsbehandlung des Sootkörpers in einer reduzierend wirkenden Atmosphäre bei einer Temperatur in einem Temperaturbereich von 800 °C bis 1100 °C durchgeführt werden. Diese Maßnahme wirkt vorteilhaft im Sinne einer Maximierung des Anteils von Fe²⁺ Ionen im Sootkörper und späteren Rohling. Als reduzierend wirkende Atmosphäre kommt eine Wasserstoff oder Kohlenmonoxid (CO) enthaltende Atmosphäre in Betracht. Die CO enthaltende Atmosphäre kann angewendet werden solange der Sootkörper noch nicht nennenswert sintert, um Gaseinschlüsse und Blasenbildung durch CO und CO₂ zu vermeiden.

Hinsichtlich der Trocknung des Eisen-dotierten SiO₂-Sootkörpers gemäß Verfahrensschritt (b) hat es sich bewährt, wenn dies in einem Temperaturbereich von 800 °C bis 1100 °C unter Vakuum bei einem Druck von weniger 10 mbar durchgeführt wird. Diese Art von thermischer Trocknung unter Vakuum reduziert den OH-Gruppenanteil auf kleiner 10 Gew.-ppm, so dass möglichst wenig OH-Gruppen für eine interne Oxidation von Fe²⁺ zu Fe³⁺ zur Verfügung steht.

Eine vorteilhafte Trocknungsalternative besteht darin, das Trocknen gemäß Verfahrensschritt (b) in einem Temperaturbereich von 800 °C bis 1100 °C und unter einer Kohlenmonoxid im Bereich von 5 mbar bis 100 mbar enthaltenden Atmosphäre durchzuführen. Diese Verfahrensweise ist besonders wirtschaftlich, da das Trocknen ganz oder teilweise in Kombination mit einer Reduktionsbehandlung in Bezug auf das Fe³⁺ erfolgt und somit schon vor der Verglasung zumindest ein Teil der Fe³⁺ in Fe²⁺ überführt werden. Besonders bewährt hat sich eine Trocknung unter einer Kohlenmonoxid (CO) enthaltenden Atmosphäre. Kohlenmonoxid hat den Vorteil, dass etwaiges Restwasser durch Bildung von Kohlendioxid (CO₂) aus dem porösen Sootkörper ausgetrieben wird. Gleichzeitig bewirkt CO eine zuverlässige Reduzierung von Fe³⁺ in Fe²⁺.

Zum Herstellen des Eisen-dotierten SiO₂-Sootkörpers mittels Flammenhydrolyse haben sich mehrere Ausgangssubstanzen als vorteilhaft erwiesen. Bevorzugt wird eine Silizium enthaltende und mindestens eine Eisen enthaltende Ausgangssubstanz eingesetzt. Das getrennte Einführen der Silizium bzw. Eisen enthaltenden Ausgangssubstanz gewährleistet eine sichere Dosierung des Eisens als Dotierstoff. Grundsätzlich können aber für das erfindungsgemäße Verfahren auch Ausgangssubstanzen, die sowohl Silizium als auch Eisen enthalten, wie etwa Eisensubstituierte Silane oder entsprechende Siloxane, eingesetzt werden, - allerdings mit dem Nachteil, dass damit der Eisenanteil festeingestellt ist.

Als Silizium und Eisen enthaltende Ausgangssubstanz eignen sich besonders halogenfreie, organische Verbindungen, wie etwa Octamethylcyclotetrasiloxan (OMCTS) in Kombination mit Eisenpentacarbonyl (Fe(CO)₅) oder Ferrocen (C₁₀H₁₀Fe). Bei der Verbrennung von OMCTS zur Abscheidung von SiO₂ ist im Vergleich zur Flammenhydrolyse von SiCl₄ als halogenhaltige, übliche Ausgangssubstanz vergleichsweise weniger Knallgas (H₂/O₂) für die Brennerflamme erforderlich, was zu einem SiO₂-Sootkörper mit einem relativ geringen Anteil an OH-Gruppen führt. In Kombination mit einer Eisen enthaltenden Ausgangssubstanz zur Herstellung des Eisen-dotierten SiO₂-Sootkörpers ist somit das Angebot an OH-Gruppen zur möglichen Oxidation von Fe²⁺ in Fe³⁺ von vornherein vorteilhaft niedrig.

Beim Ferrocen liegt das Eisen im Oxidationszustand Fe²⁺ vor, so dass diese Verbindung in Kombination mit OMCTS sowohl hinsichtlich des geringen OH-Gruppenanteils im Sootkörper als auch in Bezug auf den Oxidationszustand Fe²⁺ in der Ausgangssubstanz besonders bevorzugt ist.

Chlor oder andere Halogene enthaltende anorganische Verbindungen können aber prinzipiell auch eingesetzt werden. Nachteilig dabei wirkt sich jedoch aus, dass bei der Sootabscheidung mehr Knallgas erforderlich ist und daher der damit erhaltene SiO₂ -Sootkörper einen hohen OH-Gruppenanteil aufweist. Die OH-Gruppen müssen durch entsprechende Trocknung entfernt werden, so dass sich das gesamte Verfahren aufwendiger als das mit halogenfreien organischen Ausgangssubstanzen gestaltet.

Auch die übliche Trocknung des Sootkörpers in einer Chlor enthaltenden Atmosphäre ist im Zusammenhang mit dem erfindungsgemäßen Verfahren ungünstig, da man dem Chlor und anderen Halogenen eine oxidierende Wirkung zuschreiben muss, was im Falle des Fe-dotierten Kieselglases den unerwünschten Oxidationszustand Fe³⁺ begünstigt.

### Ausführungsbeispiel

Nachfolgend wird die Erfindung anhand von Ausführungsbeispielen und einer Zeichnung näher erläutert. Dabei zeigt:
- **Figur 1**: ein Ablaufdiagramm des erfindungsgemäßen Verfahrens, und
- **Figur 2**: den Verlauf der internen Transmission für nach dem erfindungsgemäßen Verfahren hergestellte Rohlinge über den Wellenlängenbereich von 400 nm bis 2000 nm.

### Beispiel 1

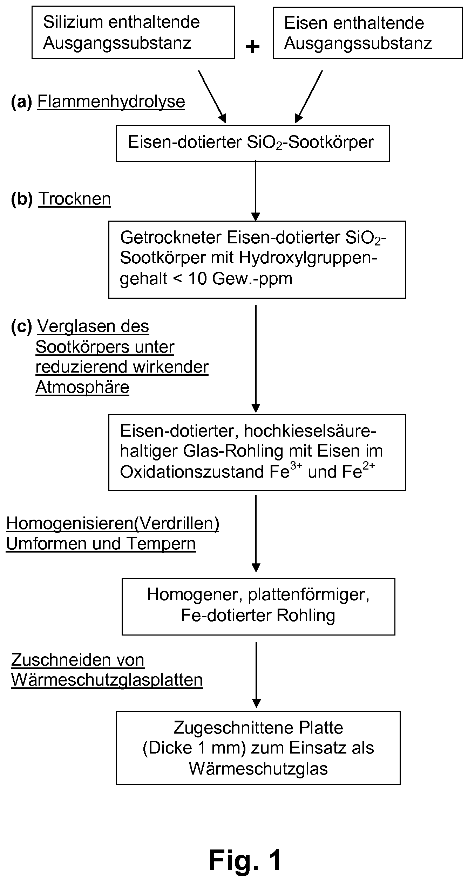

Wie dem Ablaufdiagramm gemäß **Figur 1** zu entnehmen ist, wird zunächst ein Sootkörper durch Flammenhydrolyse einer Silizium enthaltenden Ausgangssubstanz, hier Octamethylcyclotetrasiloxan (OMCTS) und Eisenpentacarbonyl (Fe(CO)₅) als Eisen enthaltende Ausgangssubstanz, anhand des bekannten "Outside-Vapor-Deposition-Verfahrens" (OVD-Verfahren) hergestellt. Der Sootkörper besteht aus synthetischem Kieselglas, das mit 0,8 Gew.-% Eisen dotiert ist.

Der Sootkörper wird bei einer Temperatur von 1100 °C in einem Heizofen mit einem Heizelement aus Grafit unter Vakuum getrocknet. Das im Heizofen vorhandene Grafit bewirkt die Einstellung reduzierender Bedingungen, was den Anteil an Fe²⁺ Ionen im Sootkörper erhöht. Bei Abschluss der Dehydratationsbehandlung nach 50 Stunden liegt der Hydroxylgruppengehalt des Sootkörpers bei etwa 10 Gew.-ppm.

Der thermisch getrocknete Fe-dotierte SiO₂-Sootkörper wird anschließend in einem Sinterofen bei einer Temperatur von ca. 1400 °C für eine Dauer von 10 Stunden zu einem transparenten Fe-dotierten Kieselglasrohling verglast (Schritt (c) in Figur 1). Dazu wird zunächst ein Vakuum von etwa 100 mbar angelegt, anschießend wird Wasserstoff mit einem Partialdruck von etwa 100 mbar in Helium in den Sinterofen eingelassen und verbleibt dort während des Verglasungsprozesses.

Nach Entnahme des verglasten Fe-dotierte Kieselglasrohling aus dem Ofen folgt zunächst eine thermisch mechanische Homogenisierung (Verdrillen) und danach ein weiterer Umformprozess zu einem zylindrischen Formkörper. Dabei wird der Rohling in eine Schmelzform aus Grafit gestellt, die einen Boden mit rundem Querschnitt und einem Außendurchmesser von 300 mm aufweist. Zum Verformen wird die gesamte Schmelzform mit dem darin befindlichen Rohling zunächst auf 1250 °C und anschließend mit einer Rampe 9 °C/min auf 1600 °C aufgeheizt und danach mit einer Rampe von 2 °C/min auf eine Temperatur von 1680 °C. Bei dieser Temperatur wird die Kieselglasmasse so lange gehalten, bis das erweichte Fe-dotierte Kieselglas unter Wirkung seines eigenen Gewichts in den Boden der Schmelzform ausgeflossen ist und diese dabei aufgefüllt hat. Aus dem Rohling wird so eine runde Platte mit einem Durchmesser von 300 mm und einer Dicke von etwa 60 mm geformt, die in allen drei Betrachtungsrichtungen schichten- und schlierenfrei ist.

Zum Abbau mechanischer Spannungen und zur Verminderung der Doppelbrechung wird der Fe-dotierte Kieselglas-Rohling einer Temperbehandlung unterzogen, bei der der zylindrische Rohling während einer Haltezeit von 8 Stunden unter Atmosphäre, die 1000 mbar Wasserstoff enthält, auf 900 °C erhitzt und anschließend mit einer Abkühlrate von 4 °C/h auf eine Temperatur von 800 °C abgekühlt und bei dieser Temperatur 4 Stunden lang gehalten wird. Danach folgt eine Abkühlung auf 300°C mit einer höheren Abkühlrate von 50 °C/h, woraufhin der Ofen abgestellt und der Rohling der freien Abkühlung des Ofens überlassen wird.

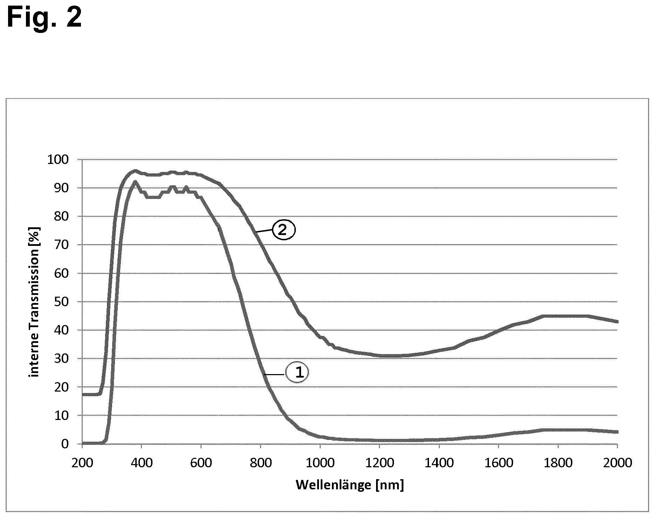

Da der Rohling in seinen Randbereichen eine relativ starke Spannungsdoppelbrechung aufweist, wird von den Stirnflächen ein Übermaß von etwa 3 mm abgenommen. Der Rohling weist eine blasse türkisgrüne Färbung auf, was auf einen hohen Anteil von Fe²⁺ hinweist. Das Verhältnis Fe³⁺/Fe²⁺ im Bereich von 3 x 10⁻⁶ bis 1 x 10⁻⁵ bewirkt eine hohe Transparenz im sichtbaren Spektralbereich und starke Absorption im Infrarotbereich. Der Rohling kann nun mit den üblichen optischen Messverfahren inspiziert und entsprechend den resultierenden Messergebnissen weiteren Verarbeitungsschritten zugeführt werden. Zur Verwendung als Wärmeschutzglas oder Shortpass-Filter werden aus dem Rohling nun je nach Anwendungsbedarf Scheiben von bis zu etwa 300 cm² und einer Dicke zwischen 1 mm und 10 mm herausgeschnitten. Die interne Transmission einer 1 mm dicken Probe aus Beispiel 1 ist in **Figur 2** mit Kurve 1 dargestellt und beträgt im sichtbaren Spektralbereich etwa 85 % bis 92 %. Im Infrarot-Spektralbereich ist eine fast vollständige Absorption festzustellen, d.h. die interne Transmission liegt hier unter 10 %. Diese Probe ist als Wärmeschutzglas beispielsweise für einen Einsatz bis 1000°C bestens geeignet. Auch im Dauerbetrieb ist keine Dunkelfärbung des Glases zu beobachten.

### Beispiel 2

Ein anderer Rohling aus Fe-dotiertem Kieselglas wird wie oben anhand von Beispiel 1 beschrieben, hergestellt, mit dem Unterschied, dass als Eisen enthaltende Ausgangssubstanz Ferrocen eingesetzt wird und die Trocknung in einer CO enthaltenden Atmosphäre durchgeführt wird.

Nach Abscheidung von OMCTS und Ferrocen (C₁₀H₁₀Fe) ist der SiO₂-Sootkörper mit 0,2 Gew.-% Eisen dotiert. Die anschließende Trocknung des Sootkörpers erfolgt bei einer Temperatur von 1000 °C, wobei 100 mbar Kohlenmonoxid (Rest: Inertgas Stickstoff oder Edelgase) in den Heizofen mit einem Heizelement aus Grafit eingelassen werden. Die so erzeugten reduzierenden Bedingungen erhöhen einerseits den Anteil an Fe²⁺ Ionen im Sootkörper und führen andererseits zu einer optimalen Reduzierung des Anteils an OH-Gruppen. Bei Abschluss dieser Dehydratationsbehandlung nach 50 Stunden liegt der Hydroxylgruppengehalt des Sootkörpers unterhalb der Nachweisgrenze (< 1 Gew.-ppm).

Der getrocknete und unter Wasserstoff-Atmosphäre verglaste Fe-dotierte SiO₂-Sootkörper wird homogenisiert, umgeformt und getempert wie anhand von Beispiel 1 beschrieben. Der danach erhaltene Rohling ist im Wesentlichen frei von Fe³⁺ Ionen. Die interne Transmission einer Wärmeschutzplatte, die nach diesem Beispiel hergestellt wurde, ist in **Figur 2** mit Kurve 2 dargestellt. Die interne Transmission im Wellenlängenbereich zwischen etwa 400 nm und 700 nm liegt bei 95 % und geht im infraroten Spektralbereich auf Werte kleiner 40 % zurück.

## Patentansprüche

1. Verfahren zur Herstellung eines Rohlings aus Eisen-dotiertem, hochkieselsäurehaltigem Glas mit einem Eisen-Gehalt im Bereich zwischen 0,1 und 1 Gew.-%, mit einer internen Transmission von maximal 40 % im infraroten Wellenlängenbereich von 800 nm bis 2000 nm und mit einer internen Transmission von mindestens 85 % im sichtbaren Spektralbereich mit Wellenlängen von 400 nm bis 800 nm bei einer Probendicke von 1 mm, für den Einsatz als Wärmeschutzglas, umfassend die folgenden Verfahrensschritte :
(a) Herstellen eines Eisen-dotierten SiO₂-Sootkörpers mittels Flammenhydrolyse einer Silizium enthaltenden und einer Eisen enthaltenden Ausgangssubstanz,
(b) Trocknen des Sootkörpers derart, dass sich ein mittlerer Hydroxylgruppengehalt von weniger als 10 Gew.-ppm einstellt,
(c) Verglasen des Sootkörpers, der Eisen in einem ersten Oxidationszustand Fe³⁺ enthält, unter einer reduzierend wirkenden Atmosphäre, die geeignet ist das Eisen zumindest teilweise von dem ersten Oxidationszustand Fe³⁺ in einen zweiten, niedrigeren Oxidationszustand Fe²⁺ zu reduzieren, unter Bildung des Rohlings aus Eisen-dotiertem, hochkieselsäurehaltigem Glas.

2. Verfahren nach Anspruch 1, **dadurch gekennzeichnet, dass** die reduzierend wirkende Atmosphäre Wasserstoff enthält.

3. Verfahren nach Anspruch 2, **dadurch gekennzeichnet, dass** die reduzierend wirkende Atmosphäre 1mbar bis 100mbar Wasserstoff in Helium umfasst.

4. Verfahren nach einem der vorhergehenden Ansprüche, **dadurch gekennzeichnet, dass** die reduzierend wirkende Atmosphäre einen Druck unterhalb von Atmosphärendruck aufweist.

5. Verfahren nach einem der vorhergehenden Ansprüche, **dadurch gekennzeichnet, dass** der Sootkörper beim Verglasen nach Verfahrensschritt (c) in einem Ofen isotherm auf eine Verglasungstemperatur erhitzt und dabei während einer Behandlungsdauer von 3 bis 15 Stunden der reduzierend wirkenden Atmosphäre ausgesetzt wird.

6. Verfahren nach Anspruch 5, **dadurch gekennzeichnet, dass** die Behandlungsdauer so eingestellt wird, dass nach dem Verglasen des Sootkörpers gemäß Verfahrensschritt (c) in dem Rohling mindestens 97 % des Eisens im Oxidationszustand Fe²⁺ erhalten wird.

7. Verfahren nach einem der vorhergehenden Ansprüche, **dadurch gekennzeichnet, dass** nach dem Verglasen des Sootkörpers gemäß Verfahrensschritt (c) eine Temperung des Rohlings in einem Temperaturbereich von 300 °C bis 1000 °C und unter einer Wasserstoff im Bereich von 15 mbar bis 30 bar enthaltenden Atmosphäre durchgeführt wird.

8. Verfahren nach einem der vorhergehenden Ansprüche, **dadurch gekennzeichnet, dass** vor dem Verglasen gemäß Verfahrensschritt (c) eine Konditionierungsbehandlung des Sootkörpers in einer reduzierend wirkenden Atmosphäre bei einer Temperatur in einem Temperaturbereich von 800 °C bis 1100 °C durchgeführt wird.

9. Verfahren nach einem der vorhergehenden Ansprüche, **dadurch gekennzeichnet, dass** das Trocknen gemäß Verfahrensschritt (b) in einem Temperaturbereich von 800 °C bis 1100 °C unter Vakuum bei einem Druck von weniger 10 mbar durchgeführt wird.

10. Verfahren nach einem der vorhergehenden Ansprüche 1 bis 8, **dadurch gekennzeichnet, dass** das Trocknen gemäß Verfahrensschritt (b) in einem Temperaturbereich von 800 °C bis 1100 °C und unter einer Kohlenmonoxid im Bereich von 5 mbar bis 100 mbar enthaltenden Atmosphäre durchgeführt wird.

11. Verfahren nach einem der vorhergehenden Ansprüche, **dadurch gekennzeichnet, dass** als Silizium und Eisen enthaltenden Ausgangssubstanzen halogenfreie organische Verbindungen eingesetzt werden.

12. Verfahren nach Anspruch 11, **dadurch gekennzeichnet, dass** als Silizium enthaltende Ausgangssubstanz Octamethylcyclotetrasiloxan (OMCTS) eingesetzt wird.

13. Verfahren nach Anspruch 11 oder 12, **dadurch gekennzeichnet, dass** als Eisen enthaltende Ausgangssubstanz Eisenpentacarbonyl (Fe(CO)₅) eingesetzt wird.

14. Verfahren nach Anspruch 11 oder 12, **dadurch gekennzeichnet, dass** als Eisen enthaltende Ausgangssubstanz Ferrocen (C₁₀H₁₀Fe) eingesetzt wird.

## Claims

1. A method for producing a blank of iron-doped glass having a high silicic acid content, an iron content in the range between 0.1 % by wt. and 1 % by wt., an internal transmission of not more than 40 % in the infrared wavelength range of 800 nm to 2000 nm, and an internal transmission of at least 85 % in the visible spectral range with wavelengths of 400 nm to 800 nm at a sample thickness of 1 mm, for use as heat protection glass, the method comprising the following steps:
(a) producing an iron-doped SiO₂ soot body by flame hydrolysis of a silicon-containing and an iron-containing precursor substance,
(b) drying the soot body such that a mean hydroxyl group content of less than 10 wt. ppm is obtained,
(c) vitrifying the soot body which contains iron in a first oxidation state Fe³⁺, in an atmosphere having a reducing effect, which is adapted to reduce the iron at least in part from the first oxidation state Fe³⁺ into a second lower oxidation state Fe²⁺ so as to form the blank of iron-doped glass having a high silicic acid content.

2. The method according to claim 1, **characterized in that** the atmosphere having the reducing effect contains hydrogen.

3. The method according to claim 2, **characterized in that** the atmosphere having the reducing effect comprises 1 mbar to 100 mbar hydrogen in helium.

4. The method according to any one of the preceding claims, **characterized in that** the atmosphere having the reducing effect has a pressure below atmospheric pressure.

5. The method according to any one of the preceding claims, **characterized in that** during vitrification according to method step (c) the soot body is isothermally heated in a furnace to a vitrification temperature and thereby exposed for a treatment period of 3 to 15 hours to the atmosphere having the reducing effect.

6. The method according to claim 5, **characterized in that** the treatment period is set such that after vitrifying the soot body according to method step (c) at least 97% of the iron in the blank is obtained in oxidation state Fe²⁺.

7. The method according to any one of the preceding claims, **characterized in that** after vitrifying the soot body according to method step (c) the blank is annealed in a temperature range of 300°C to 1000°C in an atmosphere containing hydrogen in the range of 15 mbar to 30 bar.

8. The method according to any one of the preceding claims, **characterized in that** prior to vitrifying according to method step (c) a conditioning treatment of the soot body is carried out in an atmosphere having a reducing effect at a temperature in a temperature range of from 800°C to 1100°C.

9. The method according to any one of the preceding claims, **characterized in that** drying according to method step (b) is carried out in a temperature range of from 800°C to 1100°C in vacuum at a pressure of less than 10 mbar.

10. The method according to any one of the preceding claims 1 to 8, **characterized in that** drying according to method step (b) is carried out in a temperature range of from 800°C to 1100°C in an atmosphere containing carbon monoxide in the range of 5 mbar to 100 mbar.

11. The method according to any one of the preceding claims, **characterized in that** halogen-free organic compounds are used as silicon- and iron-containing precursor substances.

12. The method according to claim 11, **characterized in that** octamethylcyclotetrasiloxane (OMCTS) is used as the silicon-containing precursor substance.

13. The method according to claim 11 or 12, **characterized in that** iron pentacarbonyl (Fe(CO)₅) is used as the iron-containing precursor substance.

14. The method according to claim 11 or 12, **characterized in that** ferrocene (C₁₀H₁₀Fe) is used as the iron-containing precursor substance.

## Revendications

1. Procédé de fabrication d'une ébauche en verre à haute teneur en acide silicique, dopée au fer, ayant une teneur en fer dans la plage comprise entre 0,1 et 1 % en poids, avec une transmission interne de maximum 40% dans la plage de longueur d'onde infrarouge de 800 nm à 2000 nm et avec une transmission interne d'au moins 85% dans le domaine spectral visible avec des longueurs d'onde de 400 nm à 800 nm, avec une épaisseur d'échantillon de 1 mm, pour l'utilisation en tant que verre thermo-isolant, comprenant les étapes de procédé suivantes :
(a) fabrication d'un corps de suie SiO₂ dopé au fer, par hydrolyse à la flamme d'une substance de départ contenant du silicium et d'une substance de départ contenant du fer,
(b) séchage du corps de suie de manière à ce qu'une teneur de groupement hydroxyle de moins de 10 ppm en poids se règle,
(c) vitrification du corps de suie qui contient du fer dans un premier état d'oxydation Fe³⁺, sous une atmosphère réductrice, laquelle est apte à réduire le fer au moins en partie du premier état d'oxydation Fe³⁺ en un deuxième état d'oxydation inférieur Fe²⁺, avec formation de l'ébauche en verre dopé au fer, à haute teneur en acide silicique.

2. Procédé selon la revendication 1, **caractérisé en ce que** l'atmosphère réductrice contient de l'hydrogène.

3. Procédé selon la revendication 2, **caractérisé en ce que** l'atmosphère réductrice comprend 1 mbar à 100 mbar d'hydrogène en hélium.

4. Procédé selon l'une quelconque des revendications précédentes, **caractérisé en ce que** l'atmosphère réductrice présente une pression inférieure à la pression atmosphérique.

5. Procédé selon l'une quelconque des revendications précédentes, **caractérisé en ce que** le corps de suie, lors de la vitrification selon l'étape de procédé (c), est échauffé dans un four de manière isotherme à une température de vitrification et est en même temps exposé pendant une durée de traitement de 3 à 15 heures à l'atmosphère réductrice.

6. Procédé selon la revendication 5, **caractérisé en ce que** la durée de traitement est réglée de manière à ce qu'après la vitrification du corps de suie selon l'étape de procédé (c), au moins 97% du fer à l'état d'oxydation Fe²⁺ sont conservés dans l'ébauche.

7. Procédé selon l'une quelconque des revendications précédentes, **caractérisé en ce qu'**après la vitrification du corps de suie selon l'étape de procédé (c), un recuit de l'ébauche est réalisé dans une plage de température de 300°C à 1000°C et sous une atmosphère contenant de l'hydrogène dans la plage de 15 mbar à 30 bars.

8. Procédé selon l'une quelconque des revendications précédentes, **caractérisé en ce qu'**avant la vitrification selon l'étape de procédé (c), un traitement de conditionnement du corps de suie est réalisé dans une atmosphère réductrice à une température située dans une plage de température de 800 °C à 1100°C.

9. Procédé selon l'une quelconque des revendications précédentes, **caractérisé en ce que** le séchage selon l'étape de procédé (b) est réalisé dans une plage de température de 800°C à 1100°C sous vide à une pression de moins de 10 mbar.

10. Procédé selon l'une quelconque des revendications 1 à 8, **caractérisé en ce qu'**après le séchage selon l'étape de procédé (b) est réalisé dans une plage de température de 800° C à 1100°C et sous une atmosphère contenant du monoxyde de carbone dans la plage de 5 mbar à 100 mbar.

11. Procédé selon l'une quelconque des revendications précédentes, **caractérisé en ce que** des liaisons organiques exemptes d'halogènes sont utilisées en tant que substances de départ contenant du silicium et du fer.

12. Procédé selon la revendication 11, **caractérisé en ce que** de l'octaméthylecyclotétrasiloxane (OMCTS) est utilisé en tant que substance de départ contenant du silicium.

13. Procédé selon la revendication 11 ou 12, **caractérisé en ce que** du pentacarbonyle de fer (Fe(CO)₅) est utilisé en tant que substance de départ contenant du fer.

14. Procédé selon la revendication 11 ou 12, **caractérisé en ce que** du ferrocène (C₁₀H₁₀Fe) est utilisé en tant que substance de départ contenant du fer.
